# EUROPÄISCHE PATENTSCHRIFT

(11) **EP 2 922 361 B1**
(45) Veröffentlichungstag und Bekanntmachung des Hinweises auf die Patenterteilung: **15.11.2017**
(21) Anmeldenummer: 15155891.3
(22) Anmeldetag: 20.02.2015
(51) Int. Cl.: H04W 72/12

(54) **FUNKÜBERTRAGUNGSSYSTEM UND FUNKÜBERTRAGUNGSVERFAHREN MIT MEHRFACHKANALZUGRIFF**
RADIO COMMUNICATION SYSTEM AND RADIO COMMUNICATION METHOD WITH MULTIPLE CHANNEL ACCESS
SYSTÈME DE TRANSMISSION PAR RADIO ET PROCÉDÉ DE TRANSMISSION PAR RADIO À ACCÈS MULTIPLE PAR RÉPARTITION EN CODE

(30) Priorität: 17.03.2014 DE 102014204886
(43) Veröffentlichungstag der Anmeldung: 23.09.2015
(73) Patentinhaber: Rohde & Schwarz GmbH & Co. KG, 81671 München (DE)
(72) Erfinder: Pfeifer, Hagen, 80687 München (DE); Obersteiner, Christian, 81369 München (DE)
(74) Vertreter: Körfer, Thomas

(56) Entgegenhaltungen:
- EP-A1- 2 094 025
- GB-A- 2 477 198
- US-A1- 2005 152 328
- JI FANG ET AL: "Fine-Grained Channel Access in Wireless LAN", IEEE / ACM TRANSACTIONS ON NETWORKING, IEEE / ACM, NEW YORK, NY, US, Bd. 21, Nr. 3, 1. Juni 2013 (2013-06-01), Seiten 772-787, XP011514826, ISSN: 1063-6692, DOI: 10.1109/TNET.2012.2212207

## Beschreibung

Die Erfindung betrifft ein Funkübertragungssystem sowie ein Funkübertragungsverfahren mit Mehrfachkanalzugriff zum Übertragen von Datenpaketen unterschiedlicher Datenquellen über einen Kommunikationskanal.

In der Funkübertragungstechnik eignen sich Mehrfachkanalzugriffe, englisch: Multiple Access Schemes, auf einen Kommunikationskanal besonders dazu, um mehreren Teilnehmern, die sich meist räumlich voneinander entfernt aufhalten, die gleichzeitige und gemeinsame Nutzung eines Hochfrequenzübertragungskanal für eine Vielzahl von verschiedenen Datenströmen zu ermöglichen. Die Teilnehmer werden nachfolgend als Datenquellen bezeichnet.

Als Mehrfachkanalzugriffe sind dabei insbesondere das Zeitmultiplexverfahren, englisch: Time Division Multiple Access, kurz: TDMA oder das Frequenzmultiplexverfahren, englisch: Frequency Division Multiple Access, kurz: FDMA oder das Kodiermultiplexverfahren, englisch: Code Division Multiple Access, kurz: CDMA, bekannt. Prinzipiell wird dabei der Kommunikationskanal in eine Vielzahl von Teilkanälen aufgeteilt, um einer möglichst großen Anzahl verschiedener Datenquellen eine gleichzeitige und gemeinsame Übertragung von Datenpaketen, auch als Nutzdaten bezeichnet, über diesen Kommunikationskanal zu ermöglichen. Der Kommunikationskanal wird dabei beispielsweise in Zeitschlitze, Frequenzschlitze oder verschiedene Kodierungen aufgeteilt, wobei jeder Datenquelle ein Teilkanal exklusiv zugewiesen wird. Die Aufteilung des Kanals erfolgt durch selbständige Bewerbung auf einen Teilkanal durch die Datenquellen selbst oder wird durch eine zentrale Instanz im Funkübertragungssystem organisiert.

Zur Vermeidung von Übertragungsfehlern bei den Mehrfachkanalzugriffen werden Kollisionserkennungsmechanismen eingesetzt, sodass insbesondere bei der fehlerhaften Zuweisung eines Teilkanals an zwei verschiedene Datenquellen keine fehlerhafte Übertragung von Datenpaketen erfolgt. Die Datenpakete der einzelnen Datenquellen können verschieden priorisiert sein, sodass einer Datenquelle mit hoher Priorisierung bei gegebener Dringlichkeit ein Teilkanal bevorzugt vor einer niedriger priorisierten Datenquelle zugewiesen wird.

Die Zuweisung des jeweiligen Teilkanals erfolgt beispielsweise durch eine statische Teilkanalzuweisung. Jede Datenquelle erhält dabei entsprechend einer festgelegten Vereinbarung einen fest definierten Zugriff auf einen Teilkanal, um Daten im Funkübertragungssystem übertragen zu können, beispielsweise eines festen Zeitschlitzes in einem TDMA-Übertragungssystem oder eine feste Frequenz in einem FDMA-Übertragungssystem. Durch ein derartig statisches Kanalzugriffsverfahren können kollisionsfreie Übertragungen ermöglicht werden. Weiterhin ist die Kanalkapazität vorhersagbar, sodass stets bekannt ist, wie ausgelastet das Funkübertragungssystem ist.

Nachteilig an einer statischen Teilkanalzuweisung ist die fehlende Flexibilität, um auf unvorhersehbare Kanalveränderungen Einfluss nehmen zu können. Derartige Änderungen des Kanals sind insbesondere eine Anpassung der Topologie des Funkübertragungssystems, veränderte Umwelteinflüsse oder ein plötzlicher Zuwachs von Datenquellen und/oder Datenmengen.

Aus diesem Grund wird heutzutage vermehrt ein dynamisches Kanalzuweisungsverfahren, englisch: Dynamic Slot Allocation, kurz DSA, verwendet. Durch Anwenden von Priorisierungen für Datenquellen, Signalqualitätsanalysen, Trägerprüfungen, englisch: Carrier Sense Multiple Access, kurz: CSMA, innerhalb der DSA wird die dynamische Allokation eines Teilkanals für die jeweilige Datenquelle spontan anhand der Umwelteinflüsse, des Kommunikationsaufkommens auf dem Kommunikationskanal und der Netztopologie zum Zeitpunkt der Datenübertragung festgelegt.

In der US 2013/0100942 A1 wird beispielsweise ein DSA-Algorithmus für mobile Spontanvernetzung, englisch: Mobile Ad-Hoc Netzwerke, kurz: MANET, eines TDMA-Funkübertragungssystems beschrieben. Dabei erfolgt die dynamische Zuweisung der Teilkanäle auf Basis einer Einteilung der Datenquellen nach geografischen Gegebenheiten, um die Dienstgüte, englisch: Quality of Service, kurz QoS, zu verbessern und so eine verbesserte Übertragung von Datenpaketen zu gewährleisten.

Die GB 2 477 198 A offenbart ein medizinisches Fernüberwachungssystem zum Überwachen von Patienten in einem Krankenhaus. Dazu wird bei einem Patienten ermittelt, ob seine vital-physiologischen Daten, wie Blutdruck, Körpertemperatur, Puls usw. keine gesundheitskritischen Werte annehmen. Somit wird einem Patienten ermöglicht, im Krankenhaus herumzulaufen und trotzdem vom Gesundheitssystem des Krankenhauses überwacht zu werden. Dieses Fernüberwachungssystem umfasst ein Übertragungsverfahren mit Mehrfachkanalzugriff. Dabei ist eine Mehrzahl von Datenquellen vorgesehen, um über einen gemeinsamen Kommunikationskanal Datenpakete auszutauschen. Eine Verhinderung einer doppelten Kanalzuweisung erfolgt jedoch nur auf der Basis der aktuellen Kanalbelegung.

Die US 2005/0152328 A1 beschreibt ein adaptives Kanalzuweisungsverfahren für Mehrkanalsysteme. Die Datenpakete werden von einer Mehrzahl von Datenquellen über ein OFDM-Übertragungsverfahren übertragen. Dabei wird ausgewertet, ob der Kanal zum aktuellen Zeitpunkt belegt ist oder nicht.

Bei den bekannten DSA-Verfahren ist es möglich, dass sich mehrere Datenquellen gleichzeitig um einen Teilkanal bewerben, um Datenpakete übertragen zu können. Diese Bewerbung erfolgt dabei auf dem Kommunikationskanal selbst, was auch als In-Bound-Signalling bezeichnet wird. Dazu wird der Übertragung von Datenpakten ein Paket mit Kopfdaten, englisch: Header, vorangestellt oder im ersten Datenpaket mitübertragen. Die Kopfdaten umfassen Zusatzinformationen, insbesondere Adressinformationen des

Senders und des Empfängers und optional die Anzahl und Größe der zu übertragenden Datenpakete.

Problematisch ist, dass Kopfdaten übertragen werden müssen, um eine eindeutige Identifizierung der Datenpakete zu ermöglichen und Kollisionen zu vermeiden. Pro Datenquelle ist zumindest ein Kopfdatenpaket vorzusehen, wodurch das Verhältnis aus Kopfdaten zu Nutzdaten verschlechtert wird. Im ungünstigen Fall wird zur Bewerbung auf einen Teilkanal zur Übertragung eines einzigen Datenpakets genau ein Kopfdatenpaket gesendet. Sollte die Bewerbung bereits beim ersten Versuch erfolgreich sein, wird der Datenquelle ein Teilkanal zugewiesen. In diesem Fall ist das Verhältnis zwischen Nutzdaten und Kopfdaten 1:1, sodass 50 Prozent der Kanalkapazität dieses Teilkanals für die Kopfdaten benötigt werden. Dieses Verhältnis verschlechtert sich weiter mit jeder erfolglosen Bewerbung auf einen Teilkanal dieser Datenquelle.

Mit derartigen Verhältnissen aus Kopfdaten und Nutzdaten ist eine effiziente Nutzung des Kommunikationskanals unmöglich. Die Kanalkapazität bezogen auf die Datenpakete ist dadurch enorm verschlechtert.

Es ist somit Aufgabe der Erfindung die Effizienz eines bestehenden Kommunikationskanals weiter zu steigern und das Verhältnis aus Kopfdaten zu Nutzdaten zu verbessern.

Dabei sollen die bestehenden Mechanismen zur Teilkanalzuweisung nicht verändert werden, sodass weiterhin auch Kollisionserkennungsmechanismen und Priorisierungen von Datenquellen erfolgreich angewendet werden können.

Diese Aufgabe wird mit einem Funkübertragungssystem gemäß Patentanspruch 1 gelöst. Weiterhin wird die Aufgabe mit einem Funkübertragungsverfahren gemäß Anspruch 13 gelöst. Vorteilhafte Ausgestaltungen und Weiterbildungen sind in den jeweils abhängigen Patentansprüchen beschrieben.

Insbesondere wird die Aufgabe durch ein Funkübertragungssystem mit Mehrfachkanalzugriff zum Übertragen von Datenpaketen unterschiedlicher Datenquellen über einen Kommunikationskanal gelöst. Das System weist eine Kanalbeobachtungseinheit auf, welche zum Beobachten der Kanalbelegung des Kommunikationskanals eingerichtet ist. Das System weist eine Auswerteeinheit auf, welche zum Auswerten der beobachteten Kanalbelegung eingerichtet ist. Das System weist weiterhin eine Kanalzuweisungseinheit auf, welche zum Zuweisen eines Teilkanals zu einer Datenquelle auf Basis der ausgewerteten Kanalbelegung eingerichtet ist. Das System weist schließlich eine Kanalsteuereinheit auf, welche zum zeitlichen Steuern der Teilkanalzuweisung eingerichtet ist.

Das Funkübertragungssystem ist insbesondere ein TDMA, CDMA und/oder FDMA-Funksystem. Insbesondere wird das Funkübertragungssystem zur mobilen Datenübertragung in einem Mobilfunknetzwerk, beispielsweise GSM, LTE, UMTS und/oder MANET eingesetzt.

Durch die beobachteten Informationen über die Kanalbelegung des Kommunikationskanals von der Kanalbeobachtungseinheit, die wiederum in der Auswerteeinheit ausgewertet wird, können Situationen betreffend die Kanalbelegung verbessert erkannt werden und insbesondere eine Unterbrechung von bereits etablierten Kanalzuweisungen einzelner Datenquellen verhindert werden.

Durch die Kanalbeobachtungseinheit und die Auswerteeinheit erfolgt eine Verbesserung der Heuristik für zukünftige Kanalbelegungen, da durch das analytisches Beobachten der Kanalbelegung Mutmaßungen und Schlussfolgerungen über die Kanalauslastung und die zukünftige Verwendung des Kommunikationskanals durch die verschiedenen Datenquellen besser vorhergesagt werden können. Nach der Beobachtung und Auswertung der Kanalbelegung erfolgt eine Gewichtung, um ein kognitives Verhalten des Kanals treffen zu können.

Dabei wird aufgrund des Wissens über die Kanalbelegung und die Auslastung des Kanals innerhalb des Funkübertragungssystems eine Reduzierung der Kopfdaten erwirkt. Somit kann das Verhältnis aus Kopfdaten und Nutzdaten wesentlich verbessert werden, wodurch die Kanalkapazität bezogen auf die Übertragung von Nutzdaten wesentlich effizienter genutzt wird.

Aufgrund dieses erfindungsgemäßen Funkübertragungssystems erfolgt die Reservierung eines Teilkanals nicht nur auf Basis der aktuellen Kanalgegebenheiten, sondern auch auf Basis der beobachteten vergangenen Kanalgegebenheiten.

Wird ein Datenpaket gesendet, entscheidet die Zuweisungseinheit auf Basis der Vergangenheit der Übertragung, welcher Teilkanal bevorzugt zu allokieren ist. Ziel ist es, so viele Teilkanäle wie möglich zu allokieren und die Anzahl an Kopfdaten gering zu halten.

Die Beobachtungseinheit ist bevorzugt dazu eingerichtet, die Kanalbelegung für mindestens eine vordefinierte Zeitdauer zu beobachten, wobei eine Zuweisung einer Datenquelle zu einem Teilkanal erst nach Ablauf der vordefinierten Zeitdauer erfolgt. So wird es in vorteilhafter Weise ermöglicht, dass Datenquellen, die noch keinen Teilkanal im Kommunikationskanal zugewiesen bekommen haben, eine vordefinierte Zeitdauer abwarten, um den Kanal zu beobachten und auszuwerten, um eine bestehende Kanalsituation auszuwerten, eine etablierte Kanalzuweisung zu erkennen und eine effiziente Kanalzuweisung ohne die erhöhte Verwendung von Kopfdaten zur Bewerbung auf einen Teilkanal zu ermöglichen.

Damit wird die Wahrscheinlichkeit einer Fehlzuweisung oder die Erhöhung der Kopfdatenrate verringert. Die vordefinierte Zeitdauer ist bevorzugt als Parameter in der Kanalbeobachtungseinheit einstellbar. Somit kann die Beobachtungszeitdauer beliebig an eine bestehende Systemtopologie oder an ein momentanes Kommunikationsaufkommen angepasst werden.

Die Kanalbeobachtungseinheit, auch als Slot Monitor bezeichnet, ist bevorzugt eine passive Einheit im Funkübertragungssystem und leitet diese Information an die passive Auswerteeinheit weiter. Nach der Auswertung der Kanalbelegung leitet die Auswerteeinheit die ausgewertete Kanalbelegung an eine Zuweisungseinheit in der Medienzugriffsteuerung, englisch: Media Access Control, kurz: MAC, mittels einer Programmierschnittstelle, englisch: Application Programming Interface, kurz: API weiter. Die Kanalbeobachtungseinheit und auch die Auswerteeinheit weisen dabei selbst keine Teilkanäle zu, sondern sammeln und werten die Kanalbelegung aus, um eine Reservierung einer günstigen und effektiven Kanalzuweisung vorzuschlagen. Mittels der Kanalbeobachtungseinheit kann eine konservative und aggressive Kanalzuweisung verhindert werden.

Die Kanalbeobachtungseinheit ist insbesondere eine Informationssammeleinheit und keine Entscheidungseinheit. Die Kanalauswerteeinheit ist insbesondere eine Informationsauswerteeinheit und keine Entscheidungseinheit. Insbesondere bei einer Komplettbelegung aller Teilkanäle wird die Information der Kanalbeobachtungseinheit verwendet, um ein aggressives Zwangszuweisen eines Teilkanals zu verhindern und eine etablierte Übertragung von Datenpaketen einer anderen Datenquelle nicht zu stören.

Die Kanalzuweisungseinheit, englisch: Slot Allocator, weist auf Basis der ausgewerteten Kanalbelegung einer Datenquelle einen Teilkanal zu. Aufgrund der Informationen aus der Auswerteeinheit erfolgt die Kanalzuweisung für die Datenquelle auf eine oder mehrere Teilkanäle für einen beliebig langen oder kurzen Zeitraum.

In einer bevorzugten Ausgestaltung ist die Auswerteeinheit eingerichtet, die beobachtete Kanalbelegung hinsichtlich potenziell freier Teilkanäle auszuwerten. In vorteilhafter Weise wird damit die Zuweisung von Teilkanälen, die für andere Datenquellen bereits in Verwendung sind oder bevorzugt zu verwenden wären, verhindert. In der Folge ist eine Übertragung ohne zusätzliche Kopfdaten ermöglicht, wodurch die Kanalkapazität effizienter zur Übertragung von Nutzdaten genutzt wird.

In einer bevorzugten Ausgestaltung ist die Auswerteeinheit eingerichtet, eine quasi-kontinuierliche Datenübertragung auf einem der Teilkanäle zu erkennen, wobei dieser Teilkanal von der Auswerteeinheit als belegt ausgewertet wird. Das Erkennen eines etablierten quasi-kontinuierlichen Datenübertragung, englisch: Data Streaming, ist insbesondere vorteilhaft, um den Teilkanal der Datenquelle des Datenstroms nicht freizugeben und einer anderen Datenquelle zuzuweisen, da damit ein höheres Aufkommen an Kopfdaten unausweichlich wäre.

In einer bevorzugten Ausgestaltung ist die Auswerteeinheit eingerichtet, eine Datenquelle mit zumindest zwei bereits zugewiesenen Teilkanälen zu erkennen, wobei die Zuweisungseinheit durch die Auswerteeinheit veranlasst wird, zumindest einen dieser zugewiesenen Teilkanäle dieser Datenquelle freizugeben. Durch diese Ausgestaltung wird in vorteilhafter Weise erreicht, dass eine neue Datenquelle nicht abgewiesen oder in einen Wartemodus, englisch: idle mode, verbleibt, sondern ihre Datenpakete auf einem exklusiv freigegeben Teilkanal von einer Datenquelle, die in der Vergangenheit eine Mehrzahl von Teilkanälen zugewiesen bekommen hat, überträgt. Somit können beide Datenquellen sofort Datenpakete übertragen.

In einer bevorzugten Ausgestaltung ist die Auswerteeinheit eingerichtet, zumindest zwei Datenquellen mit zumindest zwei bereits zugewiesenen Teilkanälen zu erkennen, wobei die Zuweisungseinheit durch die Auswerteeinheit veranlasst wird, zumindest von einer der Datenquellen zumindest einen der zugewiesenen Teilkanäle freizugeben. Das Veranlassen der Zuweisungseinheit durch die Auswerteeinheit wird insbesondere durch einen Zufallsmechanismus, englisch: Dice Rolling, erwirkt. Das Veranlassen kann überdies auch durch die Anzahl der bereits zugewiesenen Kanäle und/oder der zu übertragenden Anzahl an Datenpaketen erwirkt sein.

Somit wird ein Teilkanal freigegeben, um einer neuen Datenquelle die Übertragung von Datenpaketen im Funkübertragungssystem zu ermöglichen.

In einer bevorzugten Ausgestaltung ist die Auswerteeinheit eingerichtet, die dedizierte Nutzung eines Teilkanals für eine Datenquelle zu erkennen, wobei dieser Teilkanal als belegt erkannt wird und insbesondere nicht durch die Zuweisungseinheit stets wieder dieser Datenquelle neu zugewiesen werden muss. Durch die Beobachtungseinheit wird ein Verhalten einer Datenquelle analysiert. Stellt die Beobachtungseinheit fest, dass eine Datenquelle stets eine kleine Anzahl von Datenpaketen überträgt, so müsste im System eine ständige Zuweisung des Teilkanals zu der Datenquelle erfolgen. Durch die Beobachtungseinheit kann die Neuzuweisung des Teilkanals in vorteilhafter Weise unterbleiben. Damit wird der Teilkanal für diese Datenquelle reserviert, um die geringe Anzahl von Datenpaketen zu senden, ohne dass die Datenquelle sich stets um einen Teilkanal bewerben muss. Ein erhöhtes Auftreten von Kopfdaten wird damit verhindert. Das Verhältnis aus Nutzdaten zu Kopfdaten wird damit verbessert und die zur Verfügung stehende Kanalkapazität effizienter ausgenutzt.

Bevorzugt wertet die Auswerteeinheit die Anzahl der Datenpakete pro Datenquelle pro Zeit aus. Damit werden Informationen der Vergangenheit analysiert, um heuristische Aussagen darüber treffen zu könne, welche Datenquelle welchen Teilkanal für wie lange benötigen wird. Insbesondere Datenquellen welche quasi-kontinuierliche Datenpakete versenden oder welche eine Vielzahl kleiner Datenpakete versenden, werden in vorteilhafter Weise erkannt, wodurch die Kanalzuweisung effizienter erfolgen kann. Insbesondere kann dabei ausgewertet werden, ob eine Datenquelle eine spezifische Kanalbelegung besonders bevorzugt und/oder es vorteilhaft ist, einen Teilkanal für eine Datenquelle exklusiv reserviert zu halten. Derartige Reservierungen werden dann von der Beobachtungs- und Auswerteeinheit berücksichtigt und als Information der Kanalzuweisungseinheit zur Verfügung gestellt. Die Kanalsteuereinheit wird derartige Teilkanäle bevorzugt nicht zu weiteren Datenquellen zuweisen.

Insbesondere wird die Anzahl der zugewiesenen Teilkanäle pro Datenquelle pro Zeit ausgewertet. Damit ist sichergestellt, dass die Datenmenge, die von einer Datenquelle zu übertragen ist, erfasst wird. Meldet sich diese Datenquelle erneut, so versucht die Auswerteeinheit eine hohe Anzahl von Teilkanälen für diese Datenquelle zu reservieren, um eine möglichst zügige Übertragung des hohen Datenvolumens zu ermöglichen.

Zur Verhinderung einer ständigen Neuzuweisung eines Teilkanals an dieselbe Datenquelle wird einer Datenquelle ein Kanal dauerhaft zugewiesen, wenn die Kanalkapazität dies zulässt. Eine ständige Bewerbung um diesen Teilkanal mit Aussenden von Kopfdaten durch die Datenquelle kann dabei unterbunden werden.

Durch die heuristische Analyse des Datenvolumens in der Vergangenheit kann der Datenvolumenaufwand für die Zukunft vorhergesagt werden. Diese Information wird verwendet, um die Teilkanäle effizient zuzuweisen. Die Auswerteeinheit wertet insbesondere die Gesamtanzahl zugewiesener Teilkanäle aus.

In einer bevorzugten Ausgestaltung wird die Auswerteeinheit an eine bestehende Typologie und das spezifische Funkübertragungssystem angepasst. Dabei sind insbesondere Parameter wie Abtastrate, Auflösung, Quantisierung und Averaging zu verwenden. Somit wird eine ideale Übertragung und effiziente Übertragung über dem Kommunikationskanal ermöglicht.

Das Funkübertragungssystem weist überdies ein Kollisionsverwaltungssystem und ein Priorisierungssystem auf. Dadurch ist sichergestellt, dass das Beobachtungs- und Auswertesystem nicht die bestehenden Kollisionsverwaltungs- und Priorisierungsverwaltungsmechanismen außer Kraft setzt. Wenn eine Datenquelle mit einer hohen Dringlichkeit Daten senden muss, erfolgt die Priorisierung unabhängig von der Beobachtungs- und Auswerteeinheit.

Erfindungsgemäß ist auch ein Funkübertragungsverfahren mit Mehrfachkanalzugriff zum Übertragen von Datenpaketen über einen Kommunikationskanal vorgesehen. Das Funkübertragungsverfahren umfasst die Verfahrensschritte: Beobachten einer Kanalbelegung des Kommunikationskanals; Auswerten der beobachteten Kanalbelegung; Zuweisen eines Teilkanals in Abhängigkeit der ausgewerteten Kanalbelegung; und Steuern der Kanalbelegung anhand der zugewiesenen Teilkanäle.

Nachfolgend werden anhand von Figuren der Zeichnung die Erfindung, beispielhaft weitere Ausführungsformen und Vorteile der Erfindung näher erläutert, wobei die Figuren lediglich Ausführungsbeispiele der Erfindung beispielhaft beschreiben. Gleiche Bestandteile in den Figuren werden mit gleichen Bezugszeichen versehen. Es zeigen:
- Fig. 1: ein erstes Ausführungsbeispiel eines erfindungsgemäßen Funkübertragungssystems,
- Fig. 2: eine erste erfindungsgemäße Kanalbelegung aufgrund der ausgewerteten Kanalbelegung der Vergangenheit durch die Auswerteeinheit,
- Fig. 3: eine zu Fig. 2 alternative erfindungsgemäße Kanalbelegung aufgrund der ausgewerteten Kanalbelegung der Vergangenheit durch die Auswerteeinheit,
- Fig. 4: eine zu den Figuren 2 und 3 alternative erfindungsgemäße Kanalbelegung aufgrund der ausgewerteten Kanalbelegung der Vergangenheit durch die Auswerteeinheit,
- Fig. 5: ein erfindungsgemäßes Entscheidungsdiagramm für die Beobachtungs- und Auswerteeinheit,
- Fig. 6: eine zu den Figuren 2, 3 und 4 alternative erfindungsgemäße Kanalbelegung aufgrund der ausgewerteten Kanalbelegung der Vergangenheit durch die Auswerteeinheit,
- Fig. 7: ein erfindungsgemäßes Auswerteergebnis aufgrund der ausgewerteten Kanalbelegung der Vergangenheit durch die Auswerteeinheit.

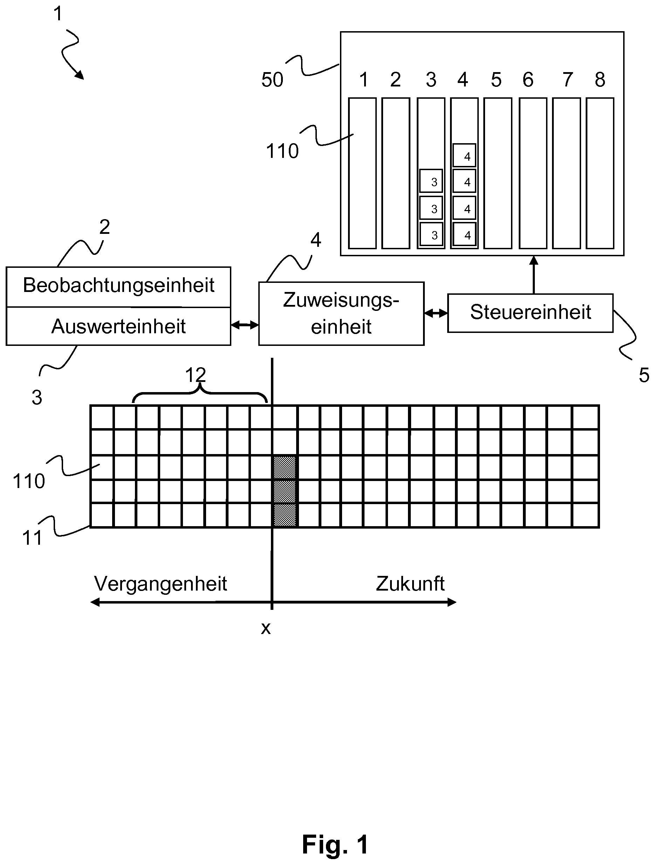

Fig. 1 zeigt ein erfindungsgemäßes Funkübertragungssystem 1. Das Funkübertragungssystem 1 umfasst eine Beobachtungseinheit 2 und eine Auswerteeinheit 3. In Fig. 1 sind Beobachtungseinheit 2 und Auswerteeinheit 3 in einem einzigen Modul dargestellt. Alternativ sind die Beobachtungseinheit 2 und die Auswerteeinheit 3 jeweils als eigenständige Komponenten in dem Funkübertragungssystem 1 vorgesehen.

Die Beobachtungseinheit 2 beobachtet die Kanalbelegung 11 des Funkübertragungssystems 1 über einen vordefinierten Zeitraum 12. Die Auswerteeinheit 3 wertet die beobachtete Kanalbelegung 11 der Beobachtungseinheit 2 aus. Diese Auswertung wird einer Zuweisungseinheit 4 zur Verfügung gestellt. Die Zuweisungseinheit 4 weist auf Basis der ausgewerteten Kanalbelegung 11 einer Datenquelle 6, 7, 8 einen Teilkanal 110 zu. Die Steuereinheit 5 erhält die Zuweisungsinformationen der Zuweisungseinheit 4 und baut einen entsprechenden Wartezeitplan 50, englisch: Channel Queues, auf.

Der Wartezeitplan 50 zeigt gemäß Fig. 1 acht Teilkanäle, wobei den Teilkanälen 1, 2, 5, 6, 7 und 8 momentan keine Datenquellen 6, 7, 8 zugewiesen sind, diese Kanäle also verfügbar wären. Hingegen sind dem Teilkanal 3 drei Datenpakete durch die Steuereinheit 5 zugewiesen, die abzuarbeiten sind, sobald der Teilkanal 3 eine Datenübertragung zulässt. Überdies sind dem Teilkanal 4 durch die Steuereinheit 5 vier Datenpakete zugewiesen. Die Teilkanäle 3 und 4 sind somit zurzeit spezifischen Datenquellen 6, 7, 8 zugewiesen.

Erfindungsgemäß ist nun vorgesehen, dass die Beobachtungseinheit 2 die Kanalbelegung 11 für eine vordefinierte Zeitdauer 12 beobachtet. Diese Zeitdauer 12 beträgt gemäß Fig. 1 im Beispiel sechs Übertragungsrahmen in einem TDMA-System. Die Anzahl an Zeitrahmen, die zur Beobachtung der Kanalbelegung 11 heranzuziehen sind, ist einstellbar und von dem jeweiligen System 1, der Topologie des Systems, Umwelteinflüssen sowie Dienstgüteanforderungen abhängig.

Sobald die Beobachtungseinheit 2 die Kanalbelegung 11 des Kommunikationskanals die vordefinierte Zeitdauer 12 beobachtet hat, wertet die Auswerteeinheit 3 diese beobachtete Kanalbelegung 11 aus. Insbesondere wird die Anzahl der freien Teilkanäle 110, die Anzahl der zugewiesenen Datenquellen 6, 7, 8 pro Zeit, die Anzahl der übertragenen Datenpakete und die Gesamtausnutzung des Kommunikationskanals ausgewertet. Weitere Auswertungen sind möglich und vom Erfindungsgedanken nicht ausgeschlossen. Auf Basis dieser Informationen wird nun im Rahmen einer heuristischen Analyse die zukünftige Kanalbelegung 11 ermittelt, bevor eine Datenquelle 6, 7, 8 einem Teilkanal 110 zugewiesen wird.

Erfindungsgemäß wird damit ein Verhältnis aus Kopfdaten und Nutzdaten verbessert. Die Beobachtungseinheit 2 und die Auswerteeinheit 3 werden in Abhängigkeit des verwendeten Funkübertragungssystems 1 eingestellt, wobei insbesondere die Art des Mehrfachzugriffs, die Abtastrate, die Auflösung, die Quantisierung und die Beobachtungszeitdauer 12 als Parameter verwendet werden.

Aufgrund der Informationen, die die Beobachtungseinheit 2 und die Auswerteeinheit 3 sammeln und auswerten, kann das Funkübertragungssystem 1 für die Vergangenheit analysiert werden und für die Zukunft an das Verhalten der einzelnen Datenquellen 6, 7, 8 und der jeweiligen Teilkanäle 110 angepasst werden. Durch die Evaluierung einer heuristischen Analyse kann eine adaptive und effiziente Kanalzuweisung ermöglicht werden. Die Heuristik ist dabei anwendungs- und applikationsabhängig. Regeln, um eine Kanalzuweisung zu verbessern, sind demnach spezifisch und systemabhängig.

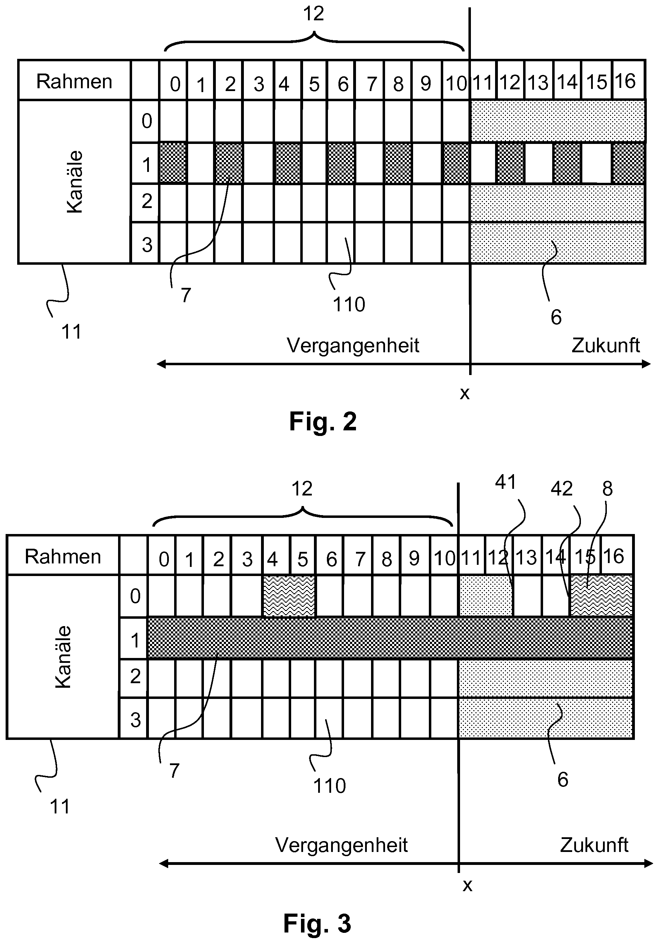

In den Figuren 2 bis 4 sowie 6 werden erfindungsgemäße Kanalbelegungen 11 eines Kommunikationskanals gemäß einem TDMA-Übertragungsverfahrens des Funksystems 1 gemäß Fig. 1 dargestellt, die eine effizientere zukünftige Kanalzuweisung ermöglichen. Dabei werden mehrere Datenquellen 6, 7, 8 an beispielhaften vier Teilkanälen 110 betrachtet. Die Anzahl der Datenquellen 6, 7, 8 sowie die Anzahl der Teilkanäle 110 ist dabei keinesfalls beschränkt.

In der Fig. 2 ist eine erfindungsgemäße Kanalbelegung 11 ab dem Zeitpunkt x vorgesehen. Gezeigt sind vier Teilkanäle 110, die mit 0, 1, 2 und 3 bezeichnet sind und deren Belegung über einen Zeitraum von 17 Rahmenzeitdauern dargestellt ist. Zu erkennen ist, dass die Beobachtungszeit 12 zehn Rahmenzeitdauern beträgt, sodass die Beobachtungseinheit 2 den Kommunikationskanal zumindest zehn Zeitrahmen beobachtet, bevor zum Zeitpunkt x eine Auswertung mittels der Auswerteeinheit 3 erfolgt. Während dieser Zeitdauer 12 wird die Kanalbelegung 11 lediglich beobachtet. Zum Auswertezeitpunkt x wertet die Auswerteeinheit 3 für das dargestellte Szenario gemäß Fig. 2 aus, dass dem ersten, dem dritten und dem vierten Teilkanal 110 nie eine Datenquelle 6, 7, 8 zugewiesen wurde. Dem zweiten Teilkanal 110 wurde eine zweite Datenquelle 7 zugewiesen. Entsprechend des vergangenen Übertragungsverhaltens der zweiten Datenquelle 7 und der Anzahl der bereits übertragenen Daten in lediglich jedem zweiten Rahmen wertet die Auswerteeinheit 3 zum Zeitpunkt x die Kanalbelegung derart aus, dass auf dem zweiten Teilkanal 110 eine quasi-kontinuierliche Datenübertragung erfolgt, die auch für die Zukunft noch andauern wird.

Im System 1 sollen nun Datenpakete einer ersten Datenquelle 6 übertragen werden. Bei der Bewerbung um einen freien Teilkanal 110 stehen zum Zeitpunkt x zufällig alle vier Teilkanäle 110 zur Verfügung. Somit könnte der ersten Datenquelle 6 jeder der vier Teilkanäle 110 zugewiesen werden. Würde die erste Datenquelle 6 den zweiten Teilkanal 110 zugewiesen bekommen, würde die zweite Datenquelle 7 mit ihrem Datenstrom auf einen alternativen Teilkanal 110 ausweichen müssen. Dazu müsste der zweite Teilkanal 110 deallokiert und ein vom zweiten Teilkanal 110 verschiedener Teilkanal 110 allokiert werden. Dies würde zu zumindest zwei zusätzlichen Kopfdatensätzen führen, wodurch das Kopfdaten-Nutzdaten Verhältnis in unerwünschter Weise verschlechtert werden würde.

Erfindungsgemäß hat nun die Beobachtungseinheit 2 erfasst, dass über den zweiten Teilkanal 110 Daten gemäß eines quasi-kontinuierlichen Signals der zweiten Datenquelle 7 übertragen werden. Die Auswerteeinheit 3 erkennt diese quasi-kontinuierlichen Übertragung der zweiten Datenquelle 7 und veranlasst die Zuweisungseinheit 4, diesen zweiten Teilkanal 110 nicht für die erste Datenquelle 6 zur Verfügung zu stellen. Die Auswerteeinheit 3 zeigt der Zuweisungseinheit 4 somit an, dass der zweite Teilkanal 110 bevorzugt nicht für die erste Datenquelle 6 zu verwenden ist. Entsprechend wird der ersten Datenquelle 6 lediglich der erste, dritte und vierte Teilkanal zugewiesen. Auf diese Weise ist vorteilhafterweise ermöglicht, dass der Datenstrom über der zweiten Datenquelle 7 weiterhin über den zweiten Teilkanal 110 übertragen wird und keine zusätzlichen Kopfdaten generiert werden müssen, die die Effizienz der Kanalkapazität hinsichtlich Nutzdatenübertragung in unerwünschter Weise verschlechtern würden.

In Fig. 3 ist eine zu Fig. 2 alternative Kanalbelegung 11 dargestellt. Ähnlich zu Fig. 2 wird in einer vordefinierten Zeitdauer 12 von zehn Rahmenzeiten die Kanalbelegung 11 des Kommunikationskanals beobachtet. Zu erkennen ist, dass der erste Teilkanal 110 dauerhaft einer zweiten Datenquelle 7 zugewiesen ist und dieser Teilkanal 110 nicht weiter zugewiesen werden sollte. Dieser zweite Teilkanal 110 sollte somit auch ab dem Zeitpunkt x nicht für andere Datenquellen 6, 8 zur Verfügung stehen.

Ab dem Zeitpunkt x hat die erste Datenquelle 6 eine Vielzahl von Datenpaketen zu übertragen, sodass ab dem 11. Zeitrahmen alle freien Teilkanäle 110 der ersten Datenquelle 6 zur Verfügung gestellt werden. Aufgrund der Beobachtung der Kanalbelegung 11 durch die Beobachtungseinheit 2 erkennt die Auswerteinheit 3, dass eine dritte Datenquelle 8 in unregelmäßigem Abstand über den ersten Teilkanal 110 Datenpakete überträgt. Durch dieses Erkennen veranlasst die Auswerteeinheit 3 die Zuweisungseinheit 4 dazu, ab dem dreizehnten Rahmen den ersten Teilkanal 110 freizugeben, was durch die Kanalfreigabe 41 erfolgt. Ab dem fünfzehnten Rahmen wird dieser erste Teilkanal 110 der dritten Datenquelle 8 zum Übertragung von Datenpaketen zugewiesen. Der dritte und vierte Teilkanal 110 wird weiterhin vollumfänglich der ersten Datenquelle 6 zugewiesen. Somit stehen der ersten Datenquelle 6 zwar lediglich zwei Teilkanäle 110 zur Datenpaket-Übertragung zur Verfügung, allerdings kann die dritten Datenquelle 8 wie gewohnt ihre Datenpakete über den ersten Teilkanal 110 übertragen, wodurch Kopfdaten und Wartezeiten der dritten Datenquelle 8 vermieden werden.

Dieses Szenario ist insbesondere sehr wahrscheinlich, wenn eine erste Datenquelle 6 alle freien Teilkanäle 110 für die Datenpaketübertragung verwendet. Mit fortschreitender Zeit steigt die Wahrscheinlichkeit, dass weitere Datenquellen 7, 8 Kanalzuweisungen 40 anfordern, was zu einem erhöhten Aufkommen an Kopfdaten führt und die Effizienz der Nutzdatenübertragung reduziert. Mittels der erfindungsgemäßen heuristischen Analyse wird vorsorglich eine Kanalfreigabe 40 eines der Teilkanäle 110 durch die Auswertung der Auswerteeinheit 3 bei der Zuweisungseinheit 4 erwirkt. Eine weitere Datenquelle 7, 8 kann dann ungehindert diesen freigewordenen Teilkanal 110 nutzen. Ein erhöhtes Kopfdatenpaket-Aufkommen wird damit verhindert.

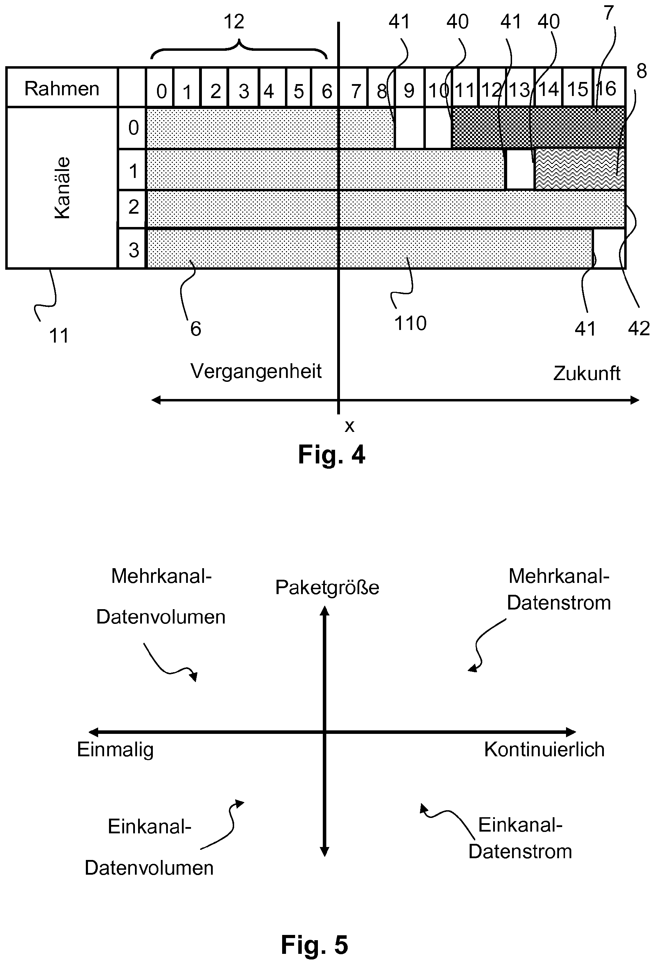

In Fig. 4 ist eine zu den Figuren 2 und 3 alternative Kanalbelegung 11 dargestellt. Die Beobachtungszeit 12 ist dabei auf sieben Zeitrahmendauern vordefiniert. Die Beobachtungseinheit 2 erkennt die Belegung aller Teilkanäle 110 durch die erste Datenquelle 6. Um nunmehr ein Übertragen von Datenpaketen auch für eine zweite Datenquelle 7 zu ermöglichen, wird sukzessive eine Teilkanalanzahlreduktion für die erste Datenquelle 6 erwirkt. Dabei wird der erste Teilkanal 110 mit dem achten Rahmen freigegeben. Die Kanalfreigabe 41 führt dazu, dass die zweite Datenquelle 7 ab dem 11. Rahmen diesen ersten Teilkanal 110 durch die Zuweisungseinheit 4 zugewiesen bekommt. Die Kanalzuweisung 40 führt dazu, dass die zweite Datenquelle 7 mit der Übertragung von Daten bereits beginnen kann, ohne eine komplette Übertragung der Datenpakete durch die erste Datenquelle 6 abwarten zu müssen. Hinzu kommt, dass mit steigender Rahmenanzahl die Wahrscheinlichkeit steigt, dass mehrere weitere Datenquellen 7, 8 sich zur Datenübertragung bewerben, wodurch die Kopfdatenrate erhöht würde.

Ähnliches Szenario erfolgt auf dem zweiten Teilkanal 110, wobei der Zeitpunkt der Kanalfreigabe erst ab dem 12. Rahmen erfolgt. Somit kann die Datenübertragung effizient an die zu übertragenden Datenmengen angepasst werden, ohne dass zusätzliche Kopfdaten kommuniziert werden.

Da die erste Datenquelle 6 den ersten Teilkanal 110 freigibt, kann die zweite Datenquelle 7 diesen ersten Teilkanal 110 zugewiesen bekommen. Auf diese Weise muss die zweite Datenquelle 7 nicht bis zum zwölften Datenrahmen abwarten, um eine Übertragung starten zu können.

In Fig. 5 ist ein erfindungsgemäßes Entscheidungsdiagramm zur Klassifizierung einer Kanalbelegung 11 dargestellt. Gemäß Fig. 5 wird bei einer Teilkanalbelegung unterschieden zwischen einmalig zu sendenden Daten und einem kontinuierlichen Datenstrom. Ein weiteres Entscheidungskriterium ist die Datenpaketgröße, sodass kleine Datenpakete bzw. eine geringe Anzahl an Datenpaketen von großen Datenmengen unterschieden werden. In Abhängigkeit dieser Entscheidungskriterien veranlasst die Auswerteeinheit 3 die Zuweisungseinheit 4 zum Zuweisen einer oder mehrerer Teilkanäle 110.

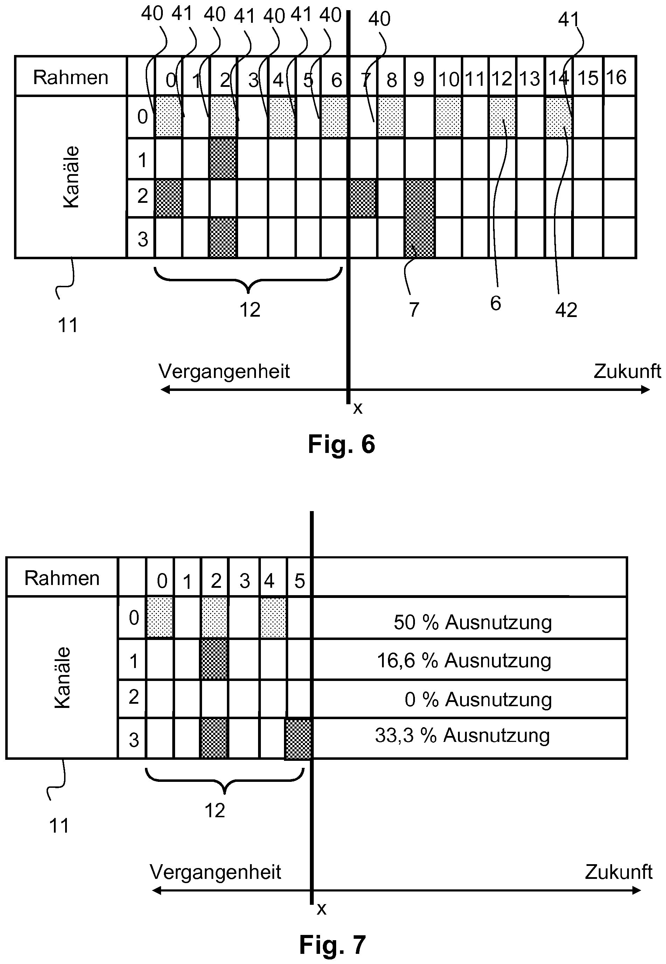

In Fig. 6 ist eine zu den Figuren 2, 3 und 4 alternative Kanalbelegung 11 dargestellt. Die Beobachtungszeit 12 ist dabei im Beispiel auf sieben Zeitrahmendauern vordefiniert. Die Beobachtungseinheit 2 erkennt eine quasi-kontinuierliche Datenübertragung der ersten Datenquelle 6 auf dem ersten Teilkanal 110. Dabei wird vor dem Zeitpunkt x jedes Datenpaket der ersten Datenquelle 6 dem ersten Teilkanal 110 zugewiesen und nach der Übertragung des Pakets wieder freigegeben. Diese Zuweisung 40 und Freigabe 41 des Teilkanals 110 für die erste Datenquelle 6 erhöht die Kopfdatenrate immens und verhindert eine effiziente Ausnutzung der Kanalkapazität des Kommunikationskanals bezüglich der Nutzdatenübertragung. Durch das Beobachten des ersten Teilkanals 110 wertet die Auswerteeinheit 3 das Übertragen als einen quasi-kontinuierlichen Datenstrom.

Um nun eine ständige Allokation 40 und Deallokation 41 zu verhindern, weist die Zuweisungseinheit 4, veranlasst durch die Auswerteeinheit 3, der ersten Datenquelle 6 dauerhaft den ersten Teilkanal 110 zu. Damit entfällt das ständige Allokieren 40 und Deallokieren 41 pro Datenpaket. Die Kopfdatenrate wird entsprechend reduziert. Die Deallokation 41 wird veranlasst, sobald die erste Datenquelle 41 das Ende 42 der Datenübertragung anzeigt.

Weiterhin zeigt die Fig. 6 eine Datenübertragung der zweiten Datenquelle 7 auf dem zweiten, dritten und vierten Teilkanal 110. Durch Beobachten und Auswerten der Vergangenheit wird die Zuweisungseinheit 4 ab dem Zeitpunkt x durch die Auswerteeinheit 3 dazu veranlasst, den zweiten Teilkanal 110 frei zu halten und die Übertragung der Daten der zweiten Datenquelle 7 nur auf den dritten und vierten Teilkanal 110 durchzuführen. Damit ist der erste Teilkanal 110 für weitere Datenquellen 8 freigehalten und kann verwendet werden, ohne dass eine Kollision bei der Bewerbung zu einem hohen Kopfdatenaufkommen führt.

In Fig. 7 ist ein Auswertergebnis der Auswerteeinheit 3 dargestellt. Dabei ist die tatsächliche Gesamtausnutzung jedes Teilkanals 110 für die letzten sechs Zeitdauern 12 berechnet. Diese Auswertungen können nunmehr dazu verwendet werden, freie Teilkanäle 110, hier der dritte Teilkanal 110, oder die Streuung einer Datenquelle 7 auf mehrere Teilkanäle 110, hier der zweiten Datenquelle 7, auf dem ersten und vierten Teilkanal 110 zu erkennen und diese Information der Zuweisungseinheit 4 zur Verfügung zu stellen.

Im Rahmen der Erfindung können alle beschriebenen und/oder beanspruchten und/oder gezeichneten Elemente beliebig miteinander kombiniert werden. Insbesondere können die erkannten und ausgewerteten Kanalbelegungen 11 der Figuren 2, 3, 4, 6 und 7 miteinander kombiniert werden.

## Patentansprüche

1. Funkübertragungssystem (1) mit Mehrfachkanalzugriff zum Übertragen von Datenpaketen unterschiedlicher Datenquellen (6, 7, 8) über einen Kommunikationskanal, aufweisend:
- eine Kanalbeobachtungseinheit (2), eingerichtet zum Beobachten der Kanalbelegung (11) des Kommunikationskanals;
- eine Auswerteeinheit (3), eingerichtet zum Auswerten der beobachteten Kanalbelegung (11);
- eine Kanalzuweisungseinheit (4), eingerichtet zum Zuweisen eines Teilkanals (110) zu einer Datenquelle (6, 7, 8), wobei dazu eine zukünftige Kanalbelegung (11) auf Basis der ausgewerteten Kanalbelegung (11) ermittelt wird, indem Informationen der Vergangenheit analysiert werden, um heuristische Aussagen darüber treffen zu können, welche Datenquelle welchen Teilkanal für wie lange benötigen wird; und
- eine Kanalsteuereinheit (5), eingerichtet zum zeitlichen Steuern der Teilkanalzuweisung.

2. Funkübertragungssystem (1) nach Anspruch 1,
wobei die Beobachtungseinheit (2) eingerichtet ist, die Kanalbelegung (11) des Kommunikationskanals für mindestens eine vordefinierte Zeitdauer (12) zu beobachten, und wobei eine Zuweisung einer Datenquelle (6, 7, 8) zu einem Teilkanal (110) erst nach Ablauf der vordefinierten Zeitdauer (12) erfolgt.

3. Funkübertragungssystem (1) nach Anspruch 1 oder 2, wobei die Auswerteeinheit (3) eingerichtet ist, die beobachtete Kanalbelegung (11) hinsichtlich potenziell freier Teilkanäle (110) auszuwerten.

4. Funkübertragungssystem (1) nach einem der vorhergehenden Ansprüche,
wobei die Auswerteeinheit (3) eingerichtet ist, eine quasi-kontinuierliche Datenübertragung auf einem der Teilkanäle (110) zu erkennen, wobei dieser Teilkanal (110) als belegt ausgewertet wird.

5. Funkübertragungssystem (1) nach einem der vorhergehenden Ansprüche,
wobei die Auswerteeinheit (3) eingerichtet ist, eine Datenquelle (6, 7, 8) mit zumindest zwei bereits zugewiesenen Teilkanälen (110) zu erkennen, und wobei die Zuweisungseinheit (4) durch die Auswerteeinheit (3) veranlasst wird, zumindest einen dieser
zugewiesenen Teilkanäle (110) dieser Datenquelle (6, 7, 8) freizugeben (41).

6. Funkübertragungssystem (1) nach einem der vorhergehenden Ansprüche,
wobei die Auswerteeinheit (3) eingerichtet ist, zumindest zwei Datenquellen (6, 7, 8) mit zumindest zwei bereits zugewiesenen Teilkanälen (110) zu erkennen, und
wobei die Zuweisungseinheit (4) durch die Auswerteeinheit (3) veranlasst wird, zumindest von einer der Datenquellen (6, 7, 8) zumindest einen der zugewiesenen Teilkanäle (110) freizugeben (41).

7. Funkübertragungssystem (1) nach einem der vorhergehenden Ansprüche,
wobei die Auswerteeinheit (3) eingerichtet ist, die dedizierte Nutzung eines Teilkanals (110) für eine Datenquelle (6, 7, 8) zu erkennen,
wobei dieser Teilkanal (110) als belegt erkannt wird und nicht durch die Zuweisungseinheit (4) stets neu dieser Datenquelle (6, 7, 8) zugewiesen (40) werden muss.

8. Funkübertragungssystem (1) nach einem der vorhergehenden Ansprüche,
wobei die Auswerteeinheit (3) die Anzahl der Datenpakete pro Datenquelle (6, 7, 8) pro Zeit auswertet.

9. Funkübertragungssystem nach einem der vorhergehenden Ansprüche,
wobei die Auswerteeinheit (3) die Anzahl der zugewiesenen Teilkanäle (110) pro Datenquelle (6, 7, 8) pro Zeit auswertet.

10. Funkübertragungssystem (1) nach einem der vorhergehenden Ansprüche,
wobei die Auswerteeinheit (3) die Gesamtanzahl zugewiesener Teilkanäle (110) auswertet.

11. Funkübertragungssystem (1) nach einem der vorhergehenden Ansprüche,
wobei die Auswerteeinheit (3) an eine bestehende Topologie und das spezifische Funkübertragungssystem (1) angepasst ist.

12. Funkübertragungssystem (1) nach einem der vorhergehenden Ansprüche,
wobei das Funkübertragungssystem (1) weiterhin ein Kollisionsverwaltungssystem und ein Priorisierungssystem umfasst.

13. Funkübertragungsverfahren mit Mehrfachkanalzugriff zum Übertragen von Datenpaketen über ein Kommunikationskanal mit den Verfahrensschritten:
- Beobachten einer Kanalbelegung des Kommunikationskanals;
- Auswerten der beobachteten Kanalbelegung;
- Zuweisen eines Teilkanals unter Ermitteln einer zukünftigen Kanalbelegung in Abhängigkeit der ausgewerteten Kanalbelegung, indem Informationen der Vergangenheit analysiert werden, um heuristische Aussagen darüber treffen zu können, welche Datenquelle welchen Teilkanal für wie lange benötigen wird; und
- Steuern der Kanalbelegung anhand der zugewiesenen Teilkanäle.

14. Funkübertragungsverfahren nach Anspruch 13,
wobei das Verfahren weiterhin ein Kollisionsverwaltungsverfahren und ein Priorisierungsverwaltungsverfahren umfasst.

## Claims

1. Radio transmission system (1) with multiple channel access for transmission of data packets of different data sources (6, 7, 8) via a communications channel, comprising:
- a channel monitoring unit (2), set up to monitor the channel loading or occupancy (11) of the communications channel;
- an evaluating unit (3), set up to evaluate the monitored channel loading or occupancy (11);
- a channel allocating unit (4), set up to allocate a sub channel (110) to a data source (6, 7, 8), for which a future channel loading or occupancy (11) is determined on the basis of the evaluated channel loading or occupancy (11) by analysing information from the past in order to be able to make heuristic statements about which data source will require which sub channel for how long; and
- a channel control unit (5), set up for control of the timing of the sub channel allocation.

2. Radio transmission system (1) according to claim 1, wherein the monitoring unit (2) is set up to monitor the channel loading or occupancy (11) of the communications channel for at least a predefined period of time (12), and wherein an allocation of a data source (6, 7, 8) to a sub channel (110) is only made after the predefined period of time (12) has elapsed.

3. Radio transmission system (1) according to claim 1 or 2,
wherein the evaluating unit (3) is set up to evaluate the monitored channel loading or occupancy (11) with respect to potentially free sub channels (110).

4. Radio transmission system (1) according to one of the preceding claims,
wherein the evaluating unit (3) is set up to recognise a quasi-continuous data transmission on one of the sub channels (110), in which case this sub channel (110) is evaluated as loaded or occupied.

5. Radio transmission system (1) according to one of the preceding claims,
wherein the evaluating unit (3) is set up to recognise a data source (6, 7, 8) with at least two already allocated sub channels (110), in which case the allocating unit (4) is instructed by the evaluating unit (3) to release (41) at least one of these allocated sub channels (110) to this data source (6, 7, 8).

6. Radio transmission system (1) according to one of the preceding claims,
wherein the evaluating unit (3) is set up to recognise at least two data sources (6, 7, 8) with at least two already allocated sub channels (110), in which case the allocating unit (4) is instructed by the evaluating unit (3) to release (41) at least one of the allocated sub channels (110) from at least one of the data sources (6, 7, 8).

7. Radio transmission system (1) according to one of the preceding claims,
wherein the evaluating unit (3) is set up to recognise the dedicated use of a sub channel (110) for a data source (6, 7, 8),
wherein this sub channel (110) is recognised as loaded or occupied and does not constantly have to be allocated anew to this data source (6, 7, 8) by the allocating unit(4).

8. Radio transmission system (1) according to one of the preceding claims,
wherein the evaluating unit (3) evaluates the number of data packets per data source (6, 7, 8) per unit of time.

9. Radio transmission system (1) according to one of the preceding claims,
wherein the evaluating unit (3) evaluates the number of allocated sub channels (110) per data source (6, 7, 8) per unit of time.

10. Radio transmitting system (1) according to one of the preceding claims,
wherein the evaluating unit (3) evaluates the total number of allocated sub channels (110).

11. Radio transmission system (1) according to one of the preceding claims,
wherein the evaluating unit (3) is matched to an existing topology and the specific radio transmission system (1).

12. Radio transmission system (1) according to one of the preceding claims,
wherein the radio transmission system (1) also comprises a collision management system and a prioritizing system.

13. Radio transmission method with multiple channel access for transmission of data packets via a communications channel with the method steps:
- monitoring of a channel loading or occupancy of the communications channel;
- evaluation of the monitored channel loading or occupancy;
- allocation of a sub channel determining a future channel loading or occupancy depending on the evaluated channel loading or occupancy by analysing information from the past in order to be able to make heuristic statements about which data source will require which sub channel for how long; and
- controlling of the channel loading or occupancy with reference to the allocated sub channels.

14. Radio transmission method according to claim 13, wherein the method also comprises a collision management method and a prioritizing management method.

## Revendications

1. Système de transmission radio (1) à accès multiple par répartition en code pour la transmission de paquets de données de différentes sources de données (6, 7, 8) par l'intermédiaire d'un canal de communication, comprenant :
- une unité de surveillance de canal (2), conçue pour surveiller l'occupation de canal (11) du canal de communication ;
- une unité d'évaluation (3), conçue pour évaluer l'occupation de canal (11) surveillée ;
- une unité d'affectation de canal (4), conçue pour affecter un sous-canal (110) à une source de données (6, 7, 8), dans laquelle une occupation de canal (11) future est déterminée à cet effet sur la base de l'occupation de canal (11) évaluée, du fait que les informations relatives au passé sont analysées, afin de pouvoir conclure de façon heuristique quelle source de données nécessitera quel canal et pour combien de temps ; et
- une unité de commande de canal (5), conçue pour commander dans le temps l'affectation du sous-canal.

2. Système de transmission radio (1) selon la revendication 1,
dans lequel l'unité de surveillance (2) est conçue pour surveiller l'occupation de canal (11) du canal de communication pendant au moins une durée prédéfinie (12), et
dans lequel une affectation d'une source de données (6, 7, 8) à un sous-canal (110) n'est réalisée qu'une fois la durée (12) prédéfinie écoulée.

3. Système de transmission radio (1) selon la revendication 1 ou 2,
dans lequel l'unité d'évaluation (3) est conçue pour évaluer l'occupation de canal (11) surveillée en ce qui concerne les sous-canaux (110) potentiellement libres.

4. Système de transmission radio (1) selon l'une quelconque des revendications précédentes,
dans lequel l'unité d'évaluation (3) est conçue pour identifier une transmission quasi-continue des données sur un des sous-canaux (110), ce sous-canal (110) étant évalué comme occupé.

5. Système de transmission radio (1) selon l'une quelconque des revendications précédentes,
dans lequel l'unité d'évaluation (3) est conçue pour identifier une source de données (6, 7, 8) comprenant au moins deux sous-canaux (110) déjà affectés, et
dans lequel l'unité d'affectation (4) est amenée par l'unité d'évaluation (3) à libérer (41) au moins un de ces sous-canaux (110) affectés de cette source de données (6, 7, 8).

6. Système de transmission radio (1) selon l'une quelconque des revendications précédentes,
dans lequel l'unité d'évaluation (3) est conçue pour identifier au moins deux sources de données (6, 7, 8) comprenant au moins deux sous-canaux (110) déjà affectés, et
dans lequel l'unité d'affectation (4) est amenée par l'unité d'évaluation (3) à libérer (41) au moins l'un des sous-canaux (110) affectés d'au moins l'une des sources de données (6, 7, 8)

7. Système de transmission radio (1) selon l'une quelconque des revendications précédentes,
dans lequel l'unité d'évaluation (3) est conçue pour identifier l'exploitation dédiée d'un sous-canal (110) à une source de données (6, 7, 8),
dans lequel ce sous-canal (110) est identifié comme occupé et ne doit pas constamment être réaffecté (40) à cette source de données (6, 7, 8) par l'unité d'affectation (4).

8. Système de transmission radio (1) selon l'une quelconque des revendications précédentes,
dans lequel l'unité d'évaluation (3) évalue le nombre de paquets de données par source de données (6, 7, 8) par unité de temps.

9. Système de transmission radio selon l'une quelconque des revendications précédentes,
dans lequel l'unité d'évaluation (3) évalue le nombre de sous-canaux (110) affectés par source de données (6, 7, 8) par unité de temps.

10. Système de transmission radio (1) selon l'une quelconque des revendications précédentes,
dans lequel l'unité d'évaluation (3) évalue le nombre total de sous-canaux (110) affectés.

11. Système de transmission radio (1) selon l'une quelconque des revendications précédentes,
dans lequel l'unité d'évaluation (3) est adaptée à une topologie existante et au système de transmission radio (1) spécifique.

12. Système de transmission radio (1) selon l'une quelconque des revendications précédentes,
dans lequel le système de transmission radio (1) comprend en outre un système de gestion de collision et un système de priorisation.

13. Procédé de transmission radio à accès multiple par répartition en code pour la transmission de paquets de données par l'intermédiaire d'un canal de communication, comprenant les étapes de procédé suivantes :
- surveiller une occupation de canal du canal de communication ;
- évaluer l'occupation de canal surveillée ;
- affecter un sous-canal par détermination d'une occupation de canal future en fonction de l'occupation de canal évaluée, du fait que les informations relatives au passé sont analysées, afin de pouvoir conclure de façon heuristique quelle source de données nécessitera quel canal et pour combien de temps ; et
- commander l'occupation du canal sur la base des sous-canaux affectés.

14. Procédé de transmission radio selon la revendication 13,
dans lequel le procédé comprend en outre un procédé de gestion de collision et un procédé de gestion de priorisation.
